# FASCICULE DE BREVET EUROPEEN

(11) **EP 1 099 610 B1**
(45) Date de publication et mention de la délivrance du brevet: **10.05.2006**
(21) Numéro de dépôt: 00402670.4
(22) Date de dépôt: 27.09.2000
(51) Int. Cl.: B60S 1/60, B60S 1/52

(54) **Dispositif perfectionné de lavage des surfaces vitrées de véhicules automobiles**
Verbesserte Vorrichtung zum Waschen von Kraftfahrzeugglasflächen
Improved device for washing glass surfaces of vehicles

(30) Priorité: 10.11.1999 FR 9914122
(43) Date de publication de la demande: 16.05.2001
(73) Titulaire: VALEO VISION, 93012 Bobigny Cédex (FR)
(72) Inventeur: Bigot, Bernard, 93012 Bobigny Cédex (FR); Vraux, Didier, 93012 Bobigny Cédex (FR)
(74) Mandataire: Hervouet, Sylvie

(56) Documents cités:
- DE-A- 19 811 827
- DE-A- 19 822 698
- FR-A- 2 651 188
- FR-A- 2 704 497
- FR-A- 2 710 016

## Description

La présente invention concerne les dispositifs de lavage des surfaces vitrées des véhicules automobiles.

L'invention trouve une application avantageuse dans le lavage des glaces de projecteurs, mais peut également être mise en oeuvre dans des dispositifs de lavage de surfaces vitrées telles que les pare-brise et lunettes arrières des véhicules.

Plus précisément, une application particulièrement avantageuse de l'invention concerne un dispositif de lavage perfectionné permettant d'améliorer l'efficacité du lavage des glaces de projecteur de dessins compliqués et/ou ayant une implantation quelconque par rapport à la direction d'avance du véhicule.

On connaît bien les dispositifs fixes de lavage des glaces de projecteur (ou d'autres surfaces vitrées), dispositifs intégrés dans une partie de structure du véhicule située à proximité de la glace à laver (par exemple dans le pare-chocs du véhicule dans le cas d'une glace de projecteur).

Ces dispositifs qui ont été historiquement les premiers développés mettent en oeuvre une buse d'aspersion pour projeter sur la surface de la glace de l'eau ou un autre liquide de lavage lorsque la buse est alimentée en liquide sous pression par un dispositif hydraulique.

Un inconvénient important de ces premiers dispositifs connus est qu'ils ne permettent généralement pas d'arroser la totalité de la glace, du fait que la distance entre la buse et la glace est nécessairement limitée et que des parties de la glace restent souvent inaccessibles aux projections de liquide de lavage. En outre, ce type de dispositif, étant fixe, ne permet pas une bonne adaptation d'un même dispositif à des glaces de géométries diverses.

On connaît également des dispositifs de lavage de glaces de projecteur dans lesquels la buse d'arrosage est montée à l'extrémité d'un organe escamotable tel qu'une tige télescopique verticale. La base de la tige est ancrée dans un logement de la structure du véhicule situé en avant et en dessous de la glace (le plus souvent dans le pare choc du véhicule), la tige pouvant être déployée hors de ce logement afin d'amener la buse dans une position sortie dans laquelle cette dernière s'élève pour arroser la glace du projecteur.

Pour déployer la tige, on utilise généralement la pression fournie par les moyens d'alimentation hydraulique, qui provoquent ainsi à la fois le déploiement de la tige et l'aspersion de la glace au travers de la buse. Lorsque le dispositif n'est plus alimenté en liquide sous pression, l'aspersion cesse et la tige est escamotée à l'intérieur de son logement sous l'action d'un ressort de rappel.

Par le document FR-A-2704497, il est connu un dispositif lave-glace de type escamotable pour projecteur d'éclairage qui est monté au niveau d'une partie centrale à l'avant du véhicule. Ce dispositif lave-glace est installé, en position escamotée, à proximité immédiate du plus petit côté de la glace du projecteur. La direction de déploiement de ce dispositif est horizontale et transversale par rapport à l'axe longitudinal du véhicule.

Le document FR-A-2651188 décrit un porte-gicleur intégré dans un feu avant d'un véhicule. Ce feu est juxtaposé à un projecteur d'éclairage et est monté coulissant vers l'avant du véhicule. Le porte-gicleur est situé sur un coté latéral du feu. Avec le coulissement du feu, le porte-gicleur se déplace horizontalement, selon l'axe longitudinal du véhicule et vers l'avant de celui-ci, et vient dans une position lui permettant de projeter un liquide de lavage sur une glace du projecteur d'éclairage.

Pour déployer la tige, on utilise généralement la pression fournie par les moyens d'alimentation hydraulique, qui provoquent ainsi à la fois le déploiement de la tige et l'aspersion de la glace au travers de la buse. Lorsque le dispositif n'est plus alimenté en liquide sous pression, l'aspersion cesse et la tige est escamotée à l'intérieur de son logement sous l'action d'un ressort de rappel.

Ces dispositifs escamotables présentent, par rapport au premier type de dispositif mentionné plus haut, l'avantage d'amener la buse dans une position plus proche du centre de la glace, de sorte que l'aspersion en liquide de lavage est améliorée.

Cependant, il ne permet pas d'arroser efficacement certaines surfaces vitrées des véhicules, en particulier la surface de certaines glaces de projecteur modernes. En effet, dans le cas de ces projecteurs modernes, la surface de la glace présente souvent au moins une des caractéristiques suivantes :
- La glace présente un allongement important ; ceci est en particulier le cas des projecteurs dont le boîtier renferme, outre l'ensemble optique du projecteur lui-même, un second ensemble optique, par exemple un deuxième projecteur ou un feu de signalisation clignotant, les deux ensembles optiques étant superposés (dans la direction verticale ou horizontale, ou même selon une direction quelconque) à l'intérieur du boîtier. Un inconvénient qui en découle est qu'un tel allongement compromet le bon arrosage de la glace, même par une buse montée au bout d'une tige télescopique.
- La surface de la glace est assez fortement inclinée par rapport aux plans transversaux à l'axe longitudinal du véhicule (alors que dans le cas des projecteurs classiques, la glace s'étend le plus souvent sensiblement dans un plan transversal du véhicule, perpendiculaire à sa direction de déplacement). Cette dernière caractéristique résulte comme la précédente de la variété croissante des dessins de carrosserie et de calandre et des lieux d'implantation des projecteurs dans le véhicule. On constate alors que le jet de liquide de lavage issu d'une buse portée par une tige télescopique implantée de manière connue en avant et en-dessous de la glace, subissant l'action du vent relatif lorsque le véhicule avance, est dévié et n'arrose pas convenablement la surface de la glace.
- La forme de la glace n'est pas sensiblement rectangulaire comme dans le cas de la majorité des glaces de projecteur traditionnelles, mais compliquée (ovoïde, triangulaire, ...). La surface de la glace comprend alors des zones assez éloignées de son centre, ce qui rend difficile le bon arrosage de ces zones.

On a également imaginé des dispositifs de lavage comprenant en plus de la tige télescopique mentionnée plus haut des moyens supplémentaires pour tenter d'améliorer l'efficacité du lavage des glaces.

Le document GB 2 026 851 A enseigne ainsi un dispositif dans lequel le jet de liquide éjecté de la buse d'aspersion n'est pas conique, mais a une forme aplatie de pinceau liquide venant frapper selon une ligne une glace de projecteur qui a de manière classique une forme rectangulaire allongée horizontalement.

De plus, la tige télescopique du dispositif peut être déployée non pas en translation, mais selon une trajectoire hélicoïdale pour asperger les côtés de la glace.

Enfin, la tige de ce dispositif connu peut également être déployée non pas selon une direction générale verticale, mais horizontalement à proximité du petit côté du rectangle de la glace, afin d'arroser convenablement toute la hauteur de la glace.

Mais le fait de monter la tige de sorte que celle-ci se déploie horizontalement en travers de la glace, s'il permet de balayer la hauteur de celle-ci, ne permet pas d'en couvrir la largeur dans le cas des glaces présentant un allongement important, la longueur de la tige étant limitée par des contraintes de résistance mécanique aux efforts aérodynamiques.

Et les autres moyens proposés, s'ils peuvent permettre dans certains cas d'améliorer l'arrosage de la glace, n'apportent pas non plus de réponse efficace à certaines glaces modernes, en particulier celles qui sont implantées dans le véhicule de manière inclinée par rapport au plan transversal du véhicule. Ainsi, un tel dispositif ne résout pas les inconvénients mentionnés ci-dessus.

Il apparaît donc de manière générale que, étant donné la complexité croissante de la forme des glaces de projecteur de véhicules automobiles, et la diversité des directions d'implantation de la glace par rapport à l'axe longitudinal du véhicule, les dispositifs connus ne constituent qu'une solution imparfaite pour l'arrosage desdites glaces.

En outre, de telles évolutions de la forme et de l'implantation des glaces ont également amené les fabricants à multiplier les dispositifs pour apporter à chaque type de carrosserie et de projecteur une configuration de la position et de l'orientation des buses la mieux adaptée possible.

Ceci entraîne une multiplication du nombre de pièces (la mise en oeuvre d'un dispositif spécifique et d'une buse particulière étant souvent nécessaire pour une glace donnée), et par conséquent des surcoûts liés à la multiplication des références.

Enfin, il faut souvent prévoir des opérations longues et coûteuses de réglage du dispositif lors de son implantation sur le véhicule : il est en effet nécessaire d'ajuster avec soin la position des organes - fixes ou mobiles - d'arrosage des glaces de projecteur, puis de procéder à des essais afin de vérifier que le champ effectivement arrosé sur la glace correspond précisément au champ désiré.

On notera que les caractéristiques exposées ci-dessus à propos des glaces de projecteur concernent également les autres surfaces vitrées des véhicules modernes (telles que les pare-brise ou les lunettes arrière), auxquelles les concepteurs ont tendance à donner également des formes et des directions d'implantation de plus en plus variées.

DE-A-198 22 698 montre le préambule de la revendication 1.

Le but de l'invention est de permettre de réaliser des dispositifs de lavage de surface vitrée de véhicules automobiles, telles que des glaces de projecteur, qui permettent de résoudre les inconvénients cités ci-dessus.

Afin d'atteindre ce but, l'invention propose un dispositif de lavage d'une surface vitrée de véhicule automobile tel que défini dans la revendication 1 annexée.

Des aspects préférés, mais non limitatifs du dispositif selon l'invention sont les suivants :
- la direction de déploiement du dispositif a une composante significative parallèle à l'axe longitudinal du véhicule.
- la surface vitrée est de forme sensiblement triangulaire et la direction d'allongement principale de la surface vitrée correspond au côté le plus long du triangle qu'elle forme.
- le dispositif est positionné en regard d'une partie de la surface vitrée avancée selon l'axe longitudinal du véhicule, de manière à ce que chaque buse du dispositif se trouve en amont de sa zone d'arrosage désirée dans le courant d'air apparent induit par l'avance du véhicule.
- la surface vitrée est une glace de projecteur dont la partie adjacente à la partie centrale du véhicule est en avant de sa partie tournée latéralement vers l'extérieur du véhicule, de sorte que la glace présente une inclinaison latérale, et le dispositif est situé à proximité de la partie de la glace qui est adjacente à la partie centrale du véhicule.
- le dispositif comprend deux buses montées de manière espacée sur le support de manière à arroser chacune une zone différente de la surface vitrée.
- la surface vitrée est une glace de fermeture d'un boîtier renfermant au moins deux ensembles optiques indépendants, chaque buse arrosant une portion de glace qui se trouve en regard d'un ensemble optique respectif.
- le support des buses comprend deux tiges formant un « T », dont une première tige montée à coulissement dans un vérin ancré dans la structure du véhicule et une deuxième tige dont la partie centrale est fixée sur l'extrémité sortante de la première tige, chaque buse étant montée sur une extrémité respective de la deuxième tige.
- il est prévu au moins un guide solidaire de la deuxième tige pour guider le déploiement du support par coopération avec des aménagements prévus sur le véhicule.
- la deuxième tige est solidaire d'un cache pour recouvrir le support lorsque celui-ci n'est pas déployé.
- il est prévu une bague destinée à être engagée autour de la première articulation en rotule afin de resserrer les parois sphériques de ladite articulation et de stabiliser la position angulaire de la pièce intermédiaire par rapport au support.
- il est prévu une bague destinée à être engagée autour de la deuxième articulation en rotule afin de resserrer les parois sphériques de ladite articulation et de stabiliser la position angulaire de la buse par rapport à la pièce intermédiaire.
- la pièce intermédiaire est coudée.

D'autres aspects, buts et avantages de l'invention apparaîtront mieux à la lecture de la description suivante de formes préférées de réalisation de l'invention, faite en référence aux dessins annexés sur lesquels :
- Les figures 1a et 1b sont respectivement une vue de côté et une vue de face d'un projecteur de véhicule automobile équipé d'un dispositif de lavage correspondant à une forme de réalisation de l'invention,
- Les figures 2a et 2b sont deux vues correspondant respectivement aux figures 1a et 1b, illustrant une variante de réalisation de l'invention,
- La figure 3 est une vue de détail d'une partie d'un dispositif de lavage selon l'invention et selon un mode de réalisation préféré, le plan de coupe IV-IV étant défini sur cette figure,
- La figure 4 est une vue en coupe d'un dispositif de lavage selon l'invention, selon le plan IV-IV.

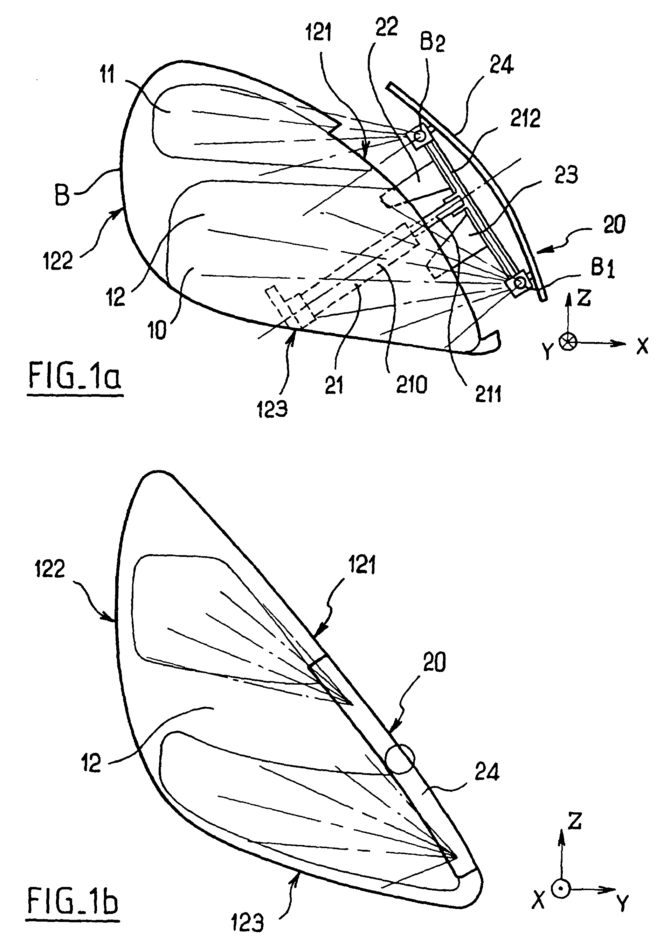

En référence à la figure 1a, on a représenté un projecteur de véhicule automobile 10, vu de côté. Par souci de clarté, on définit sur la figure le repère XYZ, X étant la direction longitudinale du véhicule sur lequel le projecteur est implanté (qui n'est pas représenté), Y et Z étant respectivement les directions transversale horizontale et transversale verticale.

Le projecteur forme un premier ensemble optique (il comprend à cet effet un réflecteur et au moins une source lumineuse non représentés), qui est contenu dans un boîtier B. Ce boîtier B contient également un deuxième ensemble optique 11, qui est un feu de signalisation, les deux ensembles optiques 10 et 11 étant superposés verticalement.

Le boîtier B est fermé par une glace 12 réalisée d'un seul tenant, qui s'étend en regard des deux ensembles optiques 10 et 11. Il est également possible de prévoir une glace séparée pour fermer chaque ensemble optique, les surfaces des glaces étant alors jointes par des éléments tels que des caches décoratifs en plastique pour assurer une continuité de surface entre eux.

La glace 12 a une forme sensiblement triangulaire, présentant ainsi trois côtés 121, 122, 123 du triangle de la glace. Le côté 121 qui est le plus allongé correspond à une direction d'allongement principale de la glace 12.

On remarquera sur la figure 1a que la surface de la glace 12 n'est pas verticale. Au contraire, cette surface est fortement inclinée de bas en haut par rapport au plan transversal vertical YZ, pour épouser une forme plongeante d'un avant de véhicule. Cette inclinaison correspond en quelque sorte à la position qui résulterait du basculement d'une glace comprise dans le plan transversal YZ, autour de l'axe Y que l'on définit comme un « axe d'inclinaison » (basculement selon l'axe d'inclinaison Y).

De même, la figure 1a montre que la glace 12 est également fortement inclinée par rapport au plan transversal YZ selon l'axe d'inclinaison Z, de la partie de la glace adjacente au centre du véhicule vers sa partie périphérique qui est située nettement plus en arrière (le projecteur représenté sur les figures 1a à 2b étant un projecteur droit).

Un dispositif de lavage 20 est implanté à proximité de la glace, plus particulièrement à proximité du côté 121 le plus long du triangle de la glace, correspondant à la direction d'allongement principale de la glace 12.

Le dispositif 20 comprend de manière connue en soi un vérin 21 dont le corps 210 est fixé sur la structure interne du véhicule et peut être alimenté en liquide de lavage sous pression.

Ce vérin possède une tige de sortie 211 qui peut coulisser axialement dans le corps du vérin et dont l'extrémité sortante est reliée fixement au milieu d'une seconde tige 212 qui lui est perpendiculaire, les deux tiges 211 et 212 formant ainsi un « T » rigide. Un cache enjoliveur 24 est fixé sur le côté de la tige 212 qui est tourné vers l'extérieur de la carrosserie.

A chacune des extrémités de la tige 212, il est prévu une buse d'arrosage B1, B2. La tige 212 ayant une longueur qui est du même ordre que la longueur de la tige 211, les deux buses B1, B2 sont nettement espacées.

Les tiges 211 et 212 et le corps du vérin comportent chacun une cavité centrale respective pour le passage du liquide de lavage, les cavités étant en communication et étant reliées de manière étanche.

Ainsi, lorsque le dispositif est alimenté en liquide de lavage sous pression, la tige 211 et la tige 212 sont déployées vers l'extérieur du véhicule et les deux buses B1 et B2 aspergent la surface de la glace 12 d'une manière spécifique grâce à l'implantation du dispositif 20 que l'on va décrire plus précisément.

En effet, le dispositif selon l'invention présente les caractéristiques suivantes :
- le dispositif 20 est avantageusement implanté à proximité d'un côté 121 de la glace qui correspond à la direction d'allongement principale de ladite glace, et plus précisément à sa direction d'allongement principale, le côté 121 étant le plus long côté de la glace triangulaire 12.
- et l'axe de déploiement de la tige 211 du vérin n'est pas comme dans le cas des dispositifs connus compris dans le plan transversal YZ qui est vertical (déploiement vertical ou horizontal), mais est incliné de manière à être sensiblement normal au plan tangent à la partie de la glace qui est à proximité, ce qui se traduit par le fait que la direction de déploiement du dispositif comprend une composante significative parallèle à l'axe longitudinal X du véhicule.

Chacune de ces dispositions permet de déployer les buses B1 et B2 en regard d'une région désirée de la glace 12.

En outre, le dispositif 20 comprenant deux buses espacées l'une de l'autre, chaque buse B1, B2 est dédiée à l'arrosage d'une région spécifique de la glace : ainsi, lorsque le dispositif est déployé la buse B1 arrose la partie de la glace 12 qui recouvre l'ensemble optique 10 et la buse B2 arrose la partie de la glace 12 qui recouvre l'ensemble optique 11.

On pourra également ajuster l'orientation inclinée de l'axe du vérin de manière à ce que les buses B1 et B2 se trouvent dans une position désirée quelconque si on veut concentrer l'aspersion de liquide sur une zone particulière.

En outre, et cela est plus particulièrement visible sur la figure 1b, le dispositif 20 est implanté du côté du projecteur qui est tourné vers l'intérieur du véhicule (le projecteur représenté de face sur la figure 1 b étant comme on l'a dit le projecteur droit du véhicule).

Etant donné la forte inclinaison de la glace 14 vers l'arrière lorsque l'on parcourt la surface de la glace de son côté tourné vers le milieu du véhicule vers son côté extérieur (inclinaison qui est traduite par le fait que la projection de la surface de la glace sur XZ, correspondant à la figure 1a, couvre une surface importante), cette disposition est également importante.

En effet, du fait de cette inclinaison le vent apparent circulant à proximité de la glace lorsque le véhicule avance ne circule pas du tout de la même manière que dans le cas d'une glace s'étendant classiquement sensiblement dans le plan YZ.

Dans ce cas classique, le vent apparent circule de manière relativement symétrique à proximité de la surface de la glace, qui forme une zone d'arrêt, et une buse amenée en regard du centre de la glace arrose une zone de la glace qui s'étend de manière sensiblement symétrique autour du centre de la glace.

Mais dans le cas de la glace des figures 1a à 2b, le vent apparent peut au contraire s'écouler de manière relativement laminaire en suivant la surface inclinée de la glace qui ne représente pas une zone d'arrêt, et le jet de chaque buse est donc entraîné dans une direction d'écoulement moyen du vent (ici vers l'extérieur de la glace qui correspond à la partie gauche de la glace dans la représentation de la figure 1b).

L'implantation des buses dans le plan YZ, choisie du côté intérieur qui est le côté de la glace le plus avancé dans ce plan, favorise ainsi la bonne aspersion de la glace car le jet de chaque buse sera entraîné vers la surface à arroser.

De même, on voit sur la figure 1a que chaque buse est située face à la partie basse de la partie de glace qu'elle doit plus particulièrement arroser, de manière à ici encore se trouver « en amont » du vent apparent qui entraînera le liquide vers le haut car la glace est également inclinée par rapport à la verticale.

On remarquera que les buses B1 et B2 sont orientées sur la tige 212 qui les porte de manière à ce que leur jet soit orienté vers la surface à asperger (surface de glace recouvrant plus particulièrement le projecteur 10 pour la buse B1, le clignotant 11 pour la buse B2).

Ainsi, l'implantation « en amont » du vent apparent combinée à l'orientation des buses permet d'assurer une bonne aspersion de la glace aussi bien lorsque le véhicule est à l'arrêt que lorsqu'il avance; dans ce dernier cas l'entraînement du vent permet en outre d'entraîner le liquide ayant déjà atterri sur la glace sur la surface de celle-ci (et d'améliorer ainsi encore le lavage), et d'évacuer le liquide ayant traversé la surface de la glace.

Le dispositif 20 comprend également deux guides 22 et 23, fixés sur la tige 212. Ces guides coopèrent en coulissement d'axe parallèle à l'axe du piston avec des aménagements complémentaires de la structure du véhicule ou du boîtier du projecteur, pour :
- Assurer le maintien de la tige 212 dans sa position déployée, malgré les efforts aérodynamiques qu'elle subit. On garantit ainsi le bon positionnement des buses en position déployée du dispositif,
- Guider la tige 212 en translation et éviter la rotation de la tige 211 autour de son axe lors du déploiement et de l'escamotage du dispositif.

Ainsi, on garantit que les buses B1 et B2 seront dans une position désirée lors du déploiement du dispositif, et que lors de l'escamotage la tige 212 rentrera correctement dans son logement et l'enjoliveur 24 recouvrira ce logement en venant en continuité de surface avec la carrosserie et/ou la surface de la glace.

On notera que la configuration du dispositif 20 avec une première tige 211 coulissant dans le piston, une deuxième tige 212 de longueur relativement importante fixée par une région médiane sur l'extrémité sortante de la tige 211 et au moins deux buses espacées sur la tige 212 de sorte que chaque buse est dédiée à l'arrosage d'une zone spécifique, permet de constituer un ensemble original en lui-même, qui peut être par ailleurs de manière quelconque par rapport à une glace de projecteur.

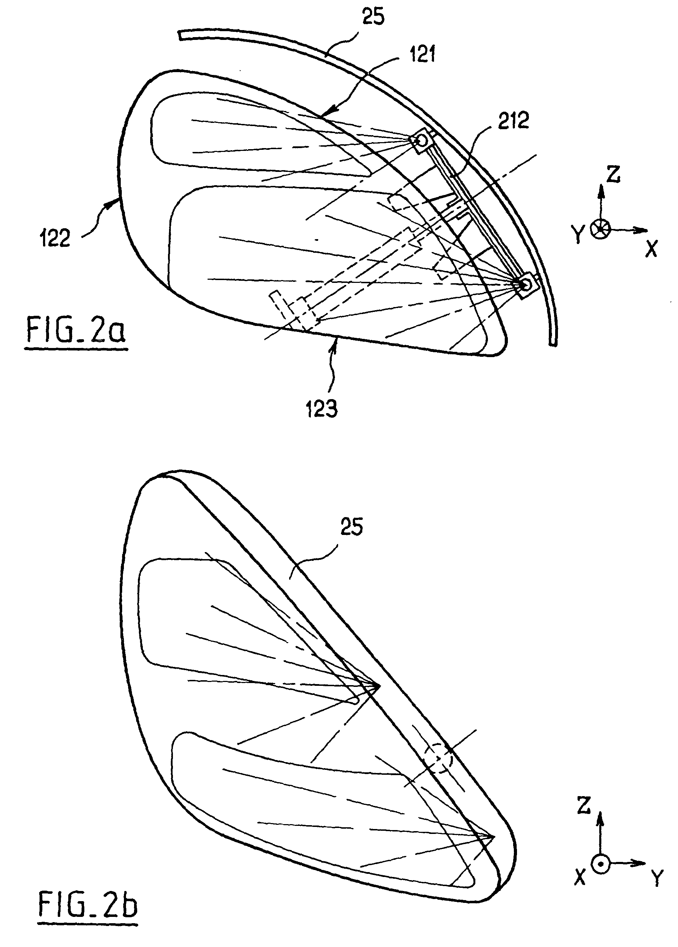

Les figures 2a et 2b représentent une variante de réalisation de l'invention, dans laquelle le cache 25 qui est fixé sur la tige 212 s'étend sensiblement tout au long du côté 121 correspondant à la direction d'allongement principale de la glace et constitue un élément de décoration séparé du boîtier, alors que dans le cas des figures 1a et 2a la longueur du cache n'était que légèrement supérieure à celle de la tige 212.

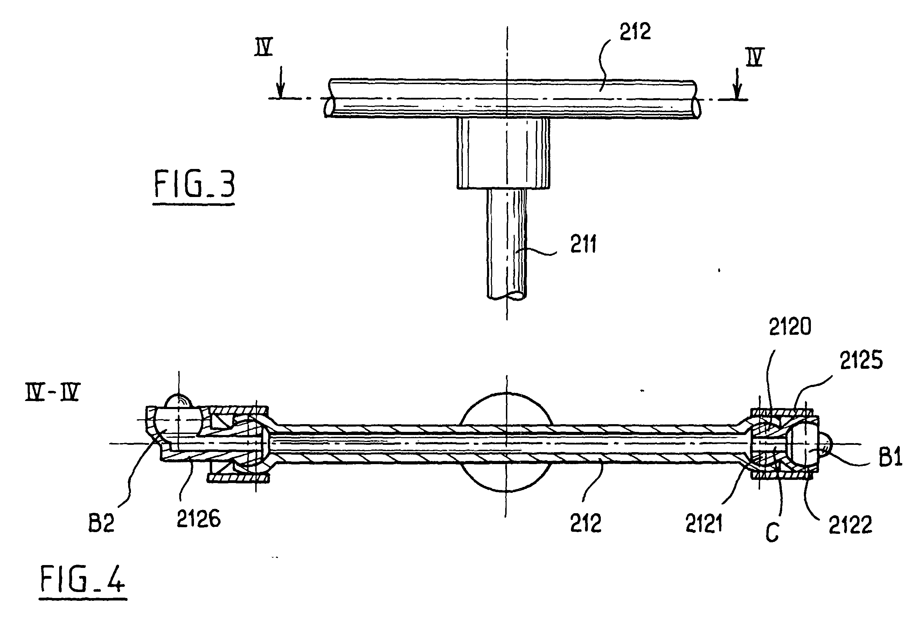

La figure 3 représente une vue partielle de détail de l'articulation entre les tiges 211 et 212 et la figure 4 est une vue de dessus en coupe du dispositif selon le plan IV-IV.

Cette dernière figure fait apparaître le mode particulier d'articulation des buses B1, B2 sur la tige 212.

La buse B1 qui est représentée sur la partie droite de la figure est ainsi montée non pas directement sur la tige 212, mais sur une pièce intermédiaire 2120.

Cette pièce intermédiaire 2120 comporte :
- une partie en rotule sphérique 2121 qui est logée dans une cavité complémentaire de l'extrémité de la tige 212, la partie 2121 étant traversée par un canal C qui est en communication avec le canal central de la tige 212,
- et une partie 2122 qui forme elle-même une cavité sphérique dans laquelle débouche le canal C, pour recevoir la buse B1 qui est alimentée en liquide de pression provenant du canal de la tige 212 par l'intermédiaire du canal C.

La buse B1 est ainsi montée sur la tige 212 par une articulation formée d'une double rotule. Cette caractéristique a pour effet avantageux de multiplier par deux le débattement angulaire possible de la buse par rapport à la tige 212; une articulation de type rotule telle qu'employée classiquement entre une buse et son support ayant un débattement de l'ordre de 20°, ce débattement est ici porté à environ 40°.

Ceci permet d'élargir considérablement le champ pouvant être arrosé par une même buse montée sur une tige grâce à une telle articulation.

Une fois la buse positionnée angulairement de la manière désirée sur l'extrémité de la tige, on bloque la position de la buse grâce à une bague 2125 clipsée qui serre l'extrémité de la tige 212 sur la partie 2121 de la pièce intermédiaire 2120, ce qui a pour effet de fixer les positions relatives des deux éléments. En effet, la tige 212 est réalisée dans un matériau plastique légèrement déformable et sous l'effet de la contrainte radiale de la bague 2125 vers l'axe de la tige, les parois de la cavité sphérique définie par l'extrémité de la tige ont tendance à se resserrer. On pourra également prévoir une fente à l'extrémité de la tige 212 afin de favoriser ce resserrement des parois de la cavité sous l'effet de la bague.

La stabilité de la position de la buse par rapport à la pièce intermédiaire 2125 est quant à elle assurée par simple adhérence de la buse sur la paroi interne de la cavité de la partie 2122, ou par une deuxième bague similaire à la bague 2125. Les parois de la cavité 2122 peuvent également comporter une fente afin de favoriser leur déformation.

On notera que dans le mode de réalisation particulier de la figure 4 la bague 2125 s'étend non seulement en regard de l'articulation entre les éléments 212 et 2120, mais également en regard de l'articulation entre les éléments 2120 et B1. Cette configuration particulière permet de resserrer radialement vers le centre les parois de la cavité 2122 sur la buse B1, jouant ainsi le rôle de la deuxième bague évoquée plus haut, mais elle impose une orientation fixe de la pièce intermédiaire 2120 par rapport à l'axe de la tige 212 (en l'occurrence ici les deux éléments sont alignés).

La partie gauche de la figure 4 représente une variante dans laquelle la partie intermédiaire 2126 entre l'extrémité de la tige 212 et la buse B2 comporte un coude à 90°. Cette variante permet de monter la buse B2 avec une gamme différente d'orientations possibles sur la tige, et d'affecter à cette buse des zones spécifiques.

Ainsi, les moyens spécifiques de montage des buses sur la tige 212 décrits ci-dessus permettent de choisir à l'intérieur d'une très large gamme le réglage d'orientation de chaque buse. Il est ainsi possible d'adapter les buses du dispositif 20 décrit en référence aux figures 1a à 2b pour qu'elles arrosent des zones qui seraient difficilement accessibles avec des buses montées de manière classique, et ce sans devoir utiliser des pièces (buses, pièces d'articulations..) différentes pour chaque type de glace.

## Revendications

1. Dispositif (20) de lavage d'une surface vitrée de véhicule automobile, en particulier d'une glace (12) de projecteur, le dispositif comprenant au moins une buse (B1, B2) qui est solidaire d'un support (211, 212) pouvant être déployé et qui est destinée à arroser une zone désirée de la surface vitrée, ladite surface vitrée possédant une direction d'allongement principale et étant sensiblement inclinée par rapport à au moins une direction transversale à l'axe longitudinal du véhicule, ledit dispositif étant implanté à proximité d'un côté de la surface vitrée (121) correspondant à sa direction d'allongement principale, chaque buse comportant partie généralement sphérique et étant montée sur une pièce intermédiaire (2120, 2126) qui est elle-même montée sur le support (212), **caractérisé en ce que** la pièce intermédiaire comporte d'une part une rotule de forme généralement sphérique (2121) destinée à être engagée dans une cavité complémentaire du support pour constituer une première articulation en rotule, et d'autre part une cavité (2122) pour recevoir la buse et constituer une deuxième articulation en rotule.

2. Dispositif selon la revendication 1, **caractérisé en ce que** la direction de déploiement du dispositif a une composante significative parallèle à l'axe longitudinal (X) du véhicule.

3. Dispositif selon la revendication 2, **caractérisé en ce que** la direction de déploiement du dispositif est sensiblement normale à la portion de surface vitrée adjacente au dispositif (20).

4. Dispositif selon l'une des revendications 1 ou 3, **caractérisé en ce que** la surface vitrée est de forme sensiblement triangulaire et la direction d'allongement principale de la surface vitrée correspond au côté (121) le plus long du triangle qu'elle forme.

5. Dispositif selon l'une des revendications 1 à 5, **caractérisé en ce que** le dispositif est positionné en regard d'une partie de la surface vitrée avancée selon l'axe longitudinal du véhicule, de manière à ce que chaque buse du dispositif se trouve en amont de sa zone d'arrosage désirée dans le courant d'air apparent induit par l'avance du véhicule.

6. Dispositif selon la revendication 5, **caractérisé en ce que** la surface vitrée est une glace de projecteur dont la partie adjacente à la partie centrale du véhicule est en avant de sa partie tournée latéralement vers l'extérieur du véhicule, de sorte que la glace présente une inclinaison latérale, et le dispositif est situé à proximité de la partie de la glace qui est adjacente à la partie centrale du véhicule.

7. Dispositif selon l'une des revendications précédentes, **caractérisé en que** le dispositif comprend deux buses (B1, B2) montées de manière espacée sur le support de manière à arroser chacune une zone différente de la surface vitrée.

8. Dispositif selon la revendication 7, **caractérisé en ce que** la surface vitrée est une glace de fermeture d'un boîtier (B) renfermant au moins deux ensembles optiques (10, 11) indépendants, chaque buse arrosant une portion de glace qui se trouve en regard d'un ensemble optique respectif.

9. Dispositif selon l'une des revendications 7 ou 8, **caractérisé en ce que** le support des buses comprend deux tiges (211, 212) formant un « T », dont une première tige (211) montée à coulissement dans un vérin (21) ancré dans la structure du véhicule et une deuxième tige (212) dont la partie centrale est fixée sur l'extrémité sortante de la première tige, chaque buse étant montée sur une extrémité respective de la deuxième tige (212).

10. Dispositif selon la revendication 9, **caractérisé en ce qu'**il est prévu au moins un guide (22, 23) solidaire de la deuxième tige pour guider le déploiement du support par coopération avec des aménagements prévus sur le véhicule.

11. Dispositif selon l'une des revendications 9 ou 10, **caractérisé en ce que** la deuxième tige est solidaire d'un cache pour recouvrir le support lorsque celui-ci n'est pas déployé.

12. Dispositif selon l'une quelconque des revendications précédentes, **caractérisé en ce qu'**il est prévu une bague (2125) destinée à être engagée autour de la première articulation en rotule afin de resserrer les parois sphériques de ladite articulation et de stabiliser la position angulaire de la pièce intermédiaire (2120) par rapport au support.

13. Dispositif selon l'une quelconque des revendications précédentes, **caractérisé en ce qu'**il est prévu une bague destinée à être engagée autour de la deuxième articulation en rotule afin de resserrer les parois sphériques de ladite articulation et de stabiliser la position angulaire de la buse par rapport à la pièce intermédiaire.

14. Dispositif selon l'une quelconque des revendications précédentes, **caractérisé en ce que** la pièce intermédiaire (2126) est coudée.

## Patentansprüche

1. Vorrichtung (20) zum Reinigen einer verglasten Kraftfahrzeugfläche, insbesondere einer Scheinwerferscheibe (12), wobei die Vorrichtung wenigstens eine Düse (B1, B2) umfasst, die mit einem ausfahrbaren Träger (211, 212) fest verbunden ist und dazu bestimmt ist, einen gewünschten Bereich der Glasfläche zu besprühen, wobei die Glasfläche eine Hauptausdehnungsrichtung besitzt und bezüglich wenigstens einer quer zur Längsachse des Fahrzeugs verlaufenden Richtung im Wesentlichen geneigt ist, wobei die Vorrichtung in der Nähe einer Seite der Glasfläche (121) angeordnet ist, die deren Hauptausdehnungsrichtung entspricht, wobei jede Düse einen allgemein kugelförmigen Teil aufweist und auf einem Zwischenstück (2120, 2126) montiert ist, das seinerseits auf dem Träger (212) angebracht ist,
**dadurch gekennzeichnet, dass** das Zwischenstück einerseits einen allgemein kugelförmigen Gelenkkopf (2121) aufweist, der dazu bestimmt ist, in eine komplementäre Höhlung des Trägers eingesetzt zu werden, um ein erstes Kugelgelenk zu bilden, und andererseits eine Höhlung (2122) umfasst, um die Düse aufzunehmen und ein zweites Kugelgelenk zu bilden.

2. Vorrichtung nach Anspruch 1,
**dadurch gekennzeichnet, dass** die Ausfahrrichtung der Vorrichtung eine signifikante, zur Längsachse (X) des Fahrzeugs parallele Komponente hat.

3. Vorrichtung nach Anspruch 2,
**dadurch gekennzeichnet, dass** die Ausfahrrichtung der Vorrichtung zu dem an die Vorrichtung (20) angrenzenden Glasflächenbereich im Wesentlichen lotrecht ist.

4. Vorrichtung nach einem der Ansprüche 1 oder 3,
**dadurch gekennzeichnet, dass** die Glasfläche im Wesentlichen dreieckig ist und die Hauptausdehnungsrichtung der Glasfläche der längsten Seite (121) des von dieser gebildeten Dreiecks entspricht.

5. Vorrichtung nach einem der Ansprüche 1 bis 4,
**dadurch gekennzeichnet, dass** die Vorrichtung gegenüber einem entlang der Längsachse des Fahrzeugs vorstehenden Teil der Glasfläche derart angeordnet ist, dass sich jede Düse der Vorrichtung oberhalb ihres gewünschten Sprühbereichs in dem durch die Vorwärtsfahrt des Fahrzeugs erzeugten Fahrtwind befindet.

6. Vorrichtung nach Anspruch 5,
**dadurch gekennzeichnet, dass** die Glasfläche eine Scheinwerferscheibe ist, deren an das Fahrzeugmittelteil angrenzender Abschnitt vor ihrem seitlich zur Außenseite des Fahrzeugs gewandten Bereich liegt, so dass die Scheibe eine seitliche Neigung aufweist, und die Vorrichtung in der Nähe des Scheibenabschnittes angeordnet ist, der an das Fahrzeugmittelteil angrenzt.

7. Vorrichtung nach einem der vorhergehenden Ansprüche,
**dadurch gekennzeichnet, dass** die Vorrichtung zwei Düsen (B1, B2) umfasst, die voneinander beabstandet auf dem Träger derart angebracht sind, dass jede einen anderen Bereich der Glasfläche besprüht.

8. Vorrichtung nach Anspruch 7,
**dadurch gekennzeichnet, dass** die Glasfläche eine Abschlussscheibe eines Gehäuses (B) ist, das wenigstens zwei separate optische Einheiten (10, 11) umschließt, wobei jede Düse einen Scheibenabschnitt besprüht, der sich jeweils gegenüber einer optischen Einheit befindet.

9. Vorrichtung nach einem der Ansprüche 7 oder 8,
**dadurch gekennzeichnet, dass** der Düsenträger zwei ein "T" bildende Stangen (211, 212) umfasst, mit einer ersten Stange (211), die gleitend in einem in der Fahrzeugstruktur verankerten Zylinder (21) angebracht ist, und einer zweiten Stange (212), deren Mittelteil auf dem ausfahrenden Ende der ersten Stange befestigt ist, wobei jede Düse auf jeweils einem Ende der zweiten Stange (212) angebracht ist.

10. Vorrichtung nach Anspruch 9,
**dadurch gekennzeichnet, dass** wenigstens eine mit der zweiten Stange fest verbundene Führung (22, 23) vorgesehen ist, um das Ausfahren des Trägers durch Zusammenwirken mit auf dem Fahrzeug vorgesehenen Einrichtungen zu leiten.

11. Vorrichtung nach einem der Ansprüche 9 oder 10,
**dadurch gekennzeichnet, dass** die zweite Stange mit einer Abdeckung fest verbunden ist, um den Träger zu verdecken, wenn dieser nicht ausgefahren ist.

12. Vorrichtung nach einem der vorhergehenden Ansprüche,
**dadurch gekennzeichnet, dass** ein Ring (2125) vorgesehen ist, der dazu bestimmt ist, um das erste Kugelgelenk herum eingesetzt zu werden, um die kugelförmigen Wände des Kugelgelenks zu verengen und die Winkelstellung des Zwischenstücks (2120) bezüglich des Trägers zu stabilisieren.

13. Vorrichtung nach einem der vorhergehenden Ansprüche,
**dadurch gekennzeichnet, dass** ein Ring vorgesehen ist, der dazu bestimmt ist, um das zweite Kugelgelenk herum eingesetzt zu werden, um die kugelförmigen Wände des Kugelgelenks zu verengen und die Winkelstellung des Düse bezüglich des Zwischenstücks zu stabilisieren.

14. Vorrichtung nach einem der vorhergehenden Ansprüche,
**dadurch gekennzeichnet, dass** das Zwischenstück (2126) eine Krümmung aufweist.

## Claims

1. Device (20) for washing a glazed surface on a motor vehicle, in particular a headlight glass (12), the device comprising at least one nozzle (B1, B2) which is fixed to a support (211, 212) able to be deployed and which is intended to spray a required area of the glazed surface, the said glazed surface having a principal elongation direction and being substantially inclined with respect to at least one direction transverse to the longitudinal axis of the vehicle, the said device being located close to one side of the glazed surface (121) corresponding to its principal elongation direction, each nozzle comprising a generally spherical part and being mounted on an intermediate piece (2120, 2126) which is itself mounted on the support (212), **characterised in that** the intermediate piece comprises on the one hand a swivel generally spherical in shape (2121), intended to be engaged in a complementary cavity in the support in order to constitute a first swivel articulation, and on the other hand a cavity (2122) for receiving the nozzle and constituting a second swivel articulation.

2. Device according to claim 1, **characterised in that** the direction of deployment of the device has a significant component parallel to the longitudinal axis (X) of the vehicle.

3. Device according to claim 2, **characterised in that** the direction of deployment of the device is substantially normal to the portion of glazed surface adjacent to the device (2).

4. Device according to one of claims 1 or 3, **characterised in that** the glazed surface is substantially triangular in shape and the principal elongation direction of the glazed surface corresponds to the longest side (121) of the triangle that it forms.

5. Device according to one of claims 1 to 5, **characterised in that** the device is positioned opposite a part of the glazed surface advanced along the longitudinal axis of the vehicle, so that each nozzle of the device is situated upstream of its required spraying area in the apparent air stream caused by the forward movement of the vehicle.

6. Device according to claim 5, **characterised in that** the glazed surface is a headlight glass whose part adjacent to the central part of the vehicle is in front of its part turned laterally towards the outside of the vehicle, so that the glass has a lateral inclination, and the device is situated close to the part of the glass which is adjacent to the central part of the vehicle.

7. Device according to one of the preceding claims, **characterised in that** the device comprises two nozzles (B1, B2) mounted so as to be spaced apart on the support in such a way as to each spray a different area of the glazed surface.

8. Device according to claim 7, **characterised in that** the glazed surface is a closure glass for a housing (B) enclosing at least two independent optical assemblies (10, 11), each nozzle spraying a portion of the glass which is situated opposite a respective optical assembly.

9. Device according to one of claims 7 or 8, **characterised in that** the support for the nozzles comprises two rods (211, 212) forming a T, including a first rod (211) slideably mounted in a cylinder (21) anchored in the structure of the vehicle and a second rod (212) whose central part is fixed to the emerging end of the first rod, each nozzle being mounted on a respective end of the second rod (212).

10. Device according to claim 9, **characterised in that** at least one guide (22, 23) fixed to the second rod is provided for guiding the deployment of the support by cooperation with fittings provided on the vehicle.

11. Device according to one of claims 9 or 10, **characterised in that** the second rod is fixed to a cover for receiving the support when the latter is not deployed.

12. Device according to any one of the preceding claims, **characterised in that** a ring (2125) is provided, intended to be engaged around the first swivel articulation in order to grip the spherical walls of the said articulation and stabilise the angular position of the intermediate piece (2120) with respect to the support.

13. Device according to any one of the preceding claims, **characterised in that** a ring is provided, intended to be engaged around the second swivel articulation in order to grip the spherical walls of the said articulation and stabilise the angular position of the nozzle with respect to the intermediate piece.

14. Device according to any one of the preceding claims, **characterised in that** the intermediate piece (2126) is angled.
